(19) Europäisches Patentamt / European Patent Office / Office européen des brevets

(11) **EP 3 216 262 B1**

(12) **EUROPEAN PATENT SPECIFICATION**

(45) Date of publication and mention
of the grant of the patent:
**02.01.2019 Bulletin 2019/01**

(21) Application number: **15857239.6**

(22) Date of filing: **06.11.2015**

(51) Int Cl.:
***H04L 5/00*** *(2006.01)*

(86) International application number:
**PCT/KR2015/011908**

(87) International publication number:
**WO 2016/072791 (12.05.2016 Gazette 2016/19)**

(54) **EFFICIENT OPERATION OF LTE CELLS ON UNLICENSED SPECTRUM**

EFFIZIENTER BETRIEB VON LTE-ZELLEN IN EINEM UNLIZENZIERTEN SPEKTRUM

FONCTIONNEMENT EFFICACE DE CELLULES DE TYPE LTE DANS UN SPECTRE SANS LICENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 06.11.2014 US 201462076344 P
17.03.2015 US 201562134396 P
10.04.2015 US 201562146099 P
05.08.2015 US 201562201406 P
25.09.2015 US 201562232946 P
05.11.2015 US 201514933933

(43) Date of publication of application:
**13.09.2017 Bulletin 2017/37**

(73) Proprietor: **Samsung Electronics Co., Ltd.**
**Gyeonggi-do 16677 (KR)**

(72) Inventors:
• **NOVLAN, Thomas David**
**Richardson TX 75082 (US)**
• **NG, Boon Loong**
**Richardson TX 75082 (US)**

(74) Representative: **Nederlandsch Octrooibureau**
**P.O. Box 29720**
**2502 LS The Hague (NL)**

(56) References cited:
WO-A1-2013/131257 WO-A1-2016/039559
WO-A1-2016/068659 US-A1- 2014 036 881
US-A1- 2014 112 277 US-A1- 2014 254 509

• **SAMSUNG: "Discussion on solutions for required functionalities and design targets for LAA", 3GPP DRAFT; R1-143879, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 5 October 2014 (2014-10-05), XP050875192, Retrieved from the Internet: URL:http://www.3gpp.org/ftp/Meetings_3GPP_ SYNC/RAN1/Docs/ [retrieved on 2014-10-05]**
• **NTT DOCOMO: 'Views on LAA for Unlicensed Spectrum' RWS-140026, 3GPP WORKSHOP ON LTE IN UNLICENSED SPECTRUM 13 June 2014, SOPHIA ANTIPOLIS, FRANCE, XP050774772**
• **'3GPP; TSGRAN; Study on Licensed-Assisted Access to Unlicensed Spectrum; (Release 13' 3GPP TR 36.889 V0.0.2 15 October 2014, XP050926758**

## Description

## Technical Field

The present disclosure relates generally to wireless communication systems and, more specifically, to a method and apparatus for channel status indication (CSI) measurement on unlicensed spectrum.

## Background Art

To meet the demand for wireless data traffic having increased since deployment of 4G (4th-Generation) communication systems, efforts have been made to develop an improved 5G (5th-Generation) or pre-5G communication system. Therefore, the 5G or pre-5G communication system is also called a 'Beyond 4G Network' or a 'Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier(FBMC), non-orthogonal multiple access(NOMA), and sparse code multiple access (SCMA) as an advanced access technology have been developed.

Unlicensed carriers are defined to provide a cost-free public access spectrum. Accordingly, use of unlicensed carriers by a user equipment (UE) is allowed only under the provisions that the UE does not generate noticeable interference to communications being served in licensed carriers. For example, unlicensed carriers including industrial, scientific and medical (ISM) carriers and unlicensed national information infrastructure (UNII) carriers may be deployed with a long term evolution (LTE) radio access technology (RAT) on an unlicensed frequency spectrum (such as LTE-Unlicensed (LTE-U) or license assisted access (LAA)).

US 2014/0036881 A1 discloses a method for transmitting control information by a base station in a wireless communication system, wherein the method comprises a step of transmitting a physical downlink control channel (PDCCH). The downlink control information of the PDCCH may include an indicator indicating whether or not a reference signal is transmitted in a time domain corresponding to the subframe in which the PDCCH is transmitted.

Samsung, "Discussion on solutions for required functionalities and design targets for LAA" (3GPP Draft; R1-143879, vol. RAN WG1, Ljubljana, Slovenia, 5 October 2014) discloses the required functionalities and design targets for LAA operations, discussion solutions of two aspects, fair co-existence with other RATs and multi-operator support.

## Disclosure of Invention

## Technical Problem

Since there may be multiple RATs operating with different radio protocols on the same unlicensed spectrum, there is a need to an enable co-existence scheme on the unlicensed frequency spectrum. Therefore, a channel estimation scheme is needed for heterogeneous RATs during a predetermined time period to determine whether there is an ongoing transmission in a wireless communication network on the unlicensed spectrum.

Embodiments of the present disclosure provide a method and apparatus for CSI measurement on an unlicensed spectrum.

## Solution to Problem

Aspects of the present invention are provided in the independent claims. Preferred embodiments are provided in the dependent claims.

In one embodiment, a method for CSI measurements is provided according to claim 1 and further detailed in dependent claims 2-5.

In another embodiment, a user equipment, UE, is provided according to claim 6. Additional details of said UE are provided in dependent claim 7.

In yet another embodiment, a method for CSI measurements is provided according to independent claim 8 and further detailed in dependent claim 9.

In yet another embodiment, a base station is provided according to claim 10. Additional details of said base station are provided in dependent claim 11.

The present invention is defined by the appended claims and limited only by their scope. Embodiment(s) referred to in this description and not fully falling within the scope of said appended claims is (are) example(s) useful for understanding the present invention.

## Advantageous Effects of Invention

Other technical features may be readily apparent to one skilled in the art from the following figures, descriptions, and claims.

## Brief Description of Drawings

For a more complete understanding of the present disclosure and its advantages, reference is now made to the following description taken in conjunction with the accompanying drawings, in which like reference numerals represent like parts:

FIGURE 1 illustrates an example wireless network according to embodiments of the present disclosure;
FIGURE 2 illustrates an example e-NodeB (eNB) according to embodiments of the present disclosure;
FIGURE 3 illustrates an example user equipment (UE) according to embodiments of the present disclosure;
FIGURE 4a illustrates a high-level diagram of an orthogonal frequency division multiple access transmit path according to embodiments of the present disclosure;
FIGURE 4b illustrates a high-level diagram of an orthogonal frequency division multiple access receive path according to embodiments of the present disclosure;
FIGURE 5 illustrates an example structure for a downlink (DL) transmission time interval (TTI) according to embodiments of the present disclosure;
FIGURE 6 illustrates an example structure for a common reference signal resource element (CRS RE) mapping according to embodiments of the present disclosure;
FIGURE 7 illustrates an example configuration of time domain positions for primary synchronization signal/secondary synchronization signal (PSS/SSS) according to embodiments of the present disclosure;
FIGURE 8 illustrates an example carrier aggregation for a licensed spectrum and an unlicensed spectrum according to embodiments of the present disclosure;
FIGURE 9 illustrates an example configuration of a transmission pattern for a licensed assist access (LAA) downlink carrier according to embodiments of the present disclosure;
FIGURE 10 illustrates an example configuration of a fixed duration channel status indication (CSI) measurement window on a license assisted access (LAA) carrier according to embodiments of the present disclosure;
FIGURE 11 illustrates an example configuration of a variable duration CSI measurement window on an LAA carrier according to embodiments of the present disclosure;
FIGURE 12 illustrates an example configuration of periodic and aperiodic discovery reference signal/CSI-reference signal (DRS/CSI-RS) occasions according to embodiments of the present disclosure; and
FIGURE 13 illustrates an example configuration of a measurement gap and a CSI measurement window across multiple LAA carriers according to embodiments of the present disclosure.

## Mode for the Invention

Before undertaking the detailed description below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

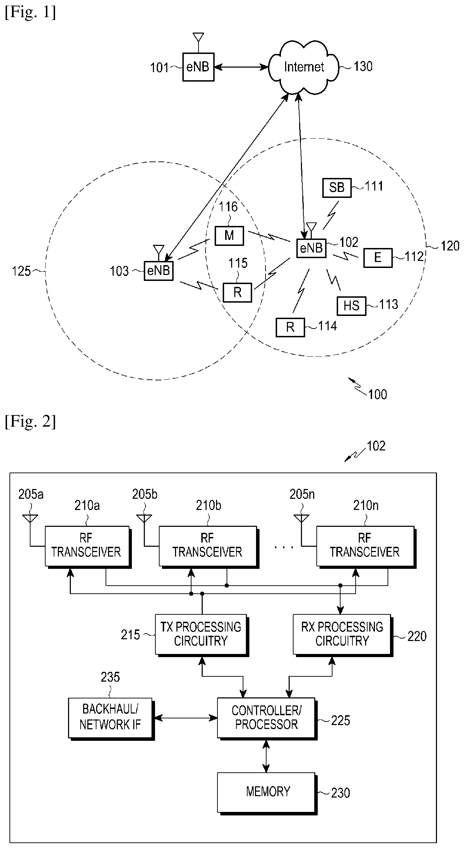

FIGURES 1 through 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

FIGURES 1-4b below describe various embodiments implemented in wireless communications systems and with the use of OFDM or OFDMA communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network 100 according to embodiments of the present disclosure. The embodiment of the wireless network 100 shown in FIGURE 1 is for illustration only. Other embodiments of the wireless network 100 could be used without departing from the scope of this disclosure.

As shown in FIGURE 1, the wireless network 100 includes an eNB 101, an eNB 102, and an eNB 103. The eNB 101 communicates with the eNB 102 and the eNB 103. The eNB 101 also communicates with at least one network 130, such as the Internet, a proprietary Internet Protocol (IP) network, or other data network.

The eNB 102 provides wireless broadband access to the network 130 for a first plurality of user equipments (UEs) within a coverage area 120 of the eNB 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the UE 116. In some embodiments, one or more of the eNBs 101-103 may communicate with each other and with the UEs 111-116 using 5G, LTE, LTE-A, WiMAX, WiFi, or other wireless communication techniques.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, may have other shapes, including irregular shapes, depending upon the configuration of the eNBs and variations in the radio environment associated with natural and man-made obstructions.

As described in more detail below, one or more of the UEs 111-116 include circuitry, programming, or a combination thereof, for efficient operation in unlicensed spectrum. In certain embodiments, and one or more of the eNBs 101-103 includes circuitry, programming, or a combination thereof, for efficient operation of LTE cells in unlicensed spectrum.

Although FIGURE 1 illustrates one example of a wireless network 100, various changes may be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNBs 101, 102, and/ or 103 could provide access to other or additional external networks, such as external telephone networks or other types of data networks.

FIGURE 2 illustrates an example eNB 102 according to embodiments of the present disclosure. The embodiment of the eNB 102 illustrated in FIGURE 2 is for illustration only, and the eNBs 101 and 103 of FIGURE 1 could have the same or similar configuration. However, eNBs come in a wide variety of configurations, and FIGURE 2 does not limit the scope of this disclosure to any particular implementation of an eNB.

As shown in FIGURE 2, the eNB 102 includes multiple antennas 205a-205n, multiple RF transceivers 210a-210n, transmit (TX) processing circuitry 215, and receive (RX) processing circuitry 220. The eNB 102 also includes a controller/ processor 225, a memory 230, and a backhaul or network interface 235.

The RF transceivers 210a-210n receive, from the antennas 205a-205n, incoming RF signals, such as signals transmitted by UEs in the network 100. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the eNB 102. For example, the controller/ processor 225 can control the reception of forward channel signals and the transmission of reverse channel signals by the RF transceivers 210a-210n, the RX processing circuitry 220, and the TX processing circuitry 215 in accordance with well-known principles. The controller/processor 225 can support additional functions as well, such as more advanced wireless communication functions. For instance, the controller/processor 225 can support beam forming or directional routing operations in which outgoing signals from multiple antennas 205a-205n are weighted differently to effectively steer the outgoing signals in a desired direction. Any of a wide variety of other functions can be supported in the eNB 102 by the controller/processor 225. In some embodiments, the controller/processor 225 includes at least one microprocessor or microcontroller. As described in more detail below, the eNB 102 includes circuitry, programming, or a combination thereof for efficient operation of LTE cells in unlicensed spectrum. For example, controller/processor 225 can be configured to execute one or more instructions, stored in memory 230, that are configured to cause the controller/processor to provide efficient operation of LTE cells in unlicensed spectrum.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the eNB 102 to communicate with other devices or systems over a backhaul connection or over a network. The interface 235 can support communications over any suitable wired or wireless connection(s). For example, when the eNB 102 is implemented as part of a cellular communication system (such as one supporting 5G, LTE, or LTE-A), the interface 235 can allow the eNB 102 to communicate with other eNBs over a wired or wireless backhaul connection. When the eNB 102 is implemented as an access point, the interface 235 can allow the eNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 can include a RAM, and another part of the memory 230 can include a Flash memory or other ROM.

Although FIGURE 2 illustrates one example of eNB 102, various changes may be made to FIGURE 2. For example, the eNB 102 can include any number of each component shown in FIGURE 2. As a particular example, an access point can include a number of interfaces 235, and the controller/processor 225 can support routing functions to route data between different network addresses. As another particular example, while shown as including a single instance of TX processing circuitry 215 and a single instance of RX processing circuitry 220, the eNB 102 can include multiple instances of each (such as one per RF transceiver). Also, various components in FIGURE 2 can be combined, further subdivided, or omitted and additional components can be added according to particular needs.

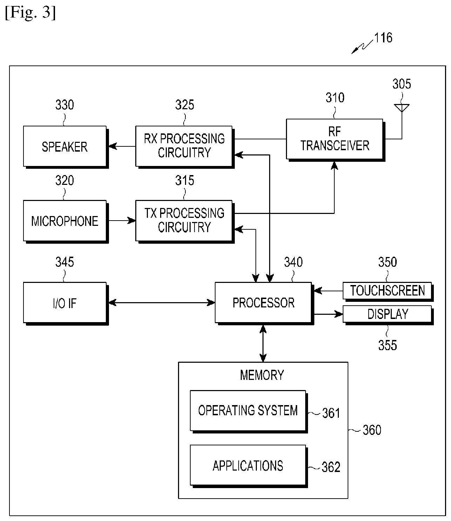

FIGURE 3 illustrates an example UE 116 according to embodiments of the present disclosure. The embodiment of the UE 116 illustrated in FIGURE 3 is for illustration only, and the UEs 111-115 of FIGURE 1 can have the same or similar configuration. However, UEs come in a wide variety of configurations, and FIGURE 3 does not limit the scope of this disclosure to any particular implementation of a UE.

As shown in FIGURE 3, the UE 116 includes an antenna 305, a radio frequency (RF) transceiver 310, TX processing circuitry 315, a microphone 320, and receive (RX) processing circuitry 325. The UE 116 also includes a speaker 330, a processor 340, an input/output (I/O) interface (IF) 345, a touchscreen 350, a display 355, and a memory 360. The memory 360 includes an operating system (OS) 361 and one or more applications 362.

The RF transceiver 310 receives, from the antenna 305, an incoming RF signal transmitted by an eNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 can control the reception of forward channel signals and the transmission of reverse channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as processes for efficient operation in unlicensed spectrum. The processor 340 can move data into or out of the memory 360 as required by an executing process. In some embodiments, the processor 340 is configured to execute the applications 362 based on the OS 361 or in response to signals received from eNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 can include a random access memory (RAM), and another part of the memory 360 can include a Flash memory or other read-only memory (ROM).

Although FIGURE 3 illustrates one example of UE 116, various changes may be made to FIGURE 3. For example, various components in FIGURE 3 can be combined, further subdivided, or omitted and additional components can be added according to particular needs. As a particular example, the processor 340 can be divided into multiple processors, such as one or more central processing units (CPUs) and one or more graphics processing units (GPUs). Also, while FIGURE 3 illustrates the UE 116 configured as a mobile telephone or smartphone, UEs can be configured to operate as other types of mobile or stationary devices.

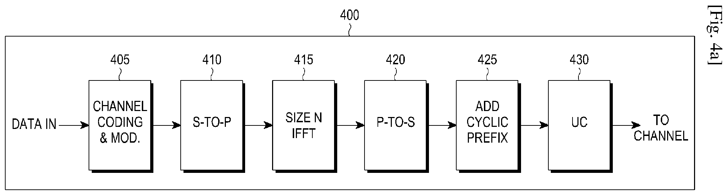

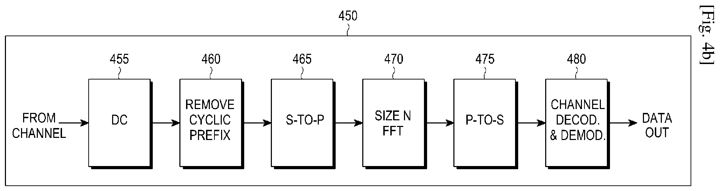

FIGURE 4a is a high-level diagram of transmit path circuitry 400. For example, the transmit path circuitry 400 may be used for an orthogonal frequency division multiple access (OFDMA) communication. FIGURE 4b is a high-level diagram of receive path circuitry 450. For example, the receive path circuitry 450 may be used for an orthogonal frequency division multiple access (OFDMA) communication. In FIGURES 4a and 4b, for downlink communication, the transmit path circuitry 400 can be implemented in a base station (eNB) 102 or a relay station, and the receive path circuitry 450 may be implemented in a user equipment (e.g. user equipment 116 of FIGURE 1). In other examples, for uplink communication, the receive path circuitry 450 can be implemented in a base station (e.g. eNB 102 of FIGURE 1) or a relay station, and the transmit path circuitry 400 can be implemented in a user equipment (e.g. user equipment 116 of FIGURE 1).

Transmit path circuitry 400 comprises channel coding and modulation block 405, serial-to-parallel (S-to-P) block 410, Size N Inverse Fast Fourier Transform (IFFT) block 415, parallel-to-serial (P-to-S) block 420, add cyclic prefix block 425, and up-converter (UC) 430. Receive path circuitry 450 comprises down-converter (DC) 455, remove cyclic prefix block 460, serial-to-parallel (S-to-P) block 465, Size N Fast Fourier Transform (FFT) block 470, parallel-to-serial (P-to-S) block 475, and channel decoding and demodulation block 480.

At least some of the components in FIGURES 4a and 4b can be implemented in software, while other components can be implemented by configurable hardware or a mixture of software and configurable hardware. In particular, it is noted that the FFT blocks and the IFFT blocks described in this disclosure document can be implemented as configurable software algorithms, where the value of Size N can be modified according to the implementation.

Furthermore, although this disclosure is directed to an embodiment that implements the Fast Fourier Transform and the Inverse Fast Fourier Transform, this is by way of illustration only and should not be construed to limit the scope of the disclosure. It will be appreciated that in an alternate embodiment of the disclosure, the Fast Fourier Transform functions and the Inverse Fast Fourier Transform functions may easily be replaced by Discrete Fourier Transform (DFT) functions and Inverse Discrete Fourier Transform (IDFT) functions, respectively. It will be appreciated that for DFT and IDFT functions, the value of the N variable may be any integer number (i.e., 1, 4, 3, 4, etc.), while for FFT and IFFT functions, the value of the N variable may be any integer number that is a power of two (i.e., 1, 2, 4, 8, 16, etc.).

In transmit path circuitry 400, channel coding and modulation block 405 receives a set of information bits, applies coding (e.g., Low Density Parity Check (LDPC) coding) and modulates (e.g., Quadrature Phase Shift Keying (QPSK) or Quadrature Amplitude Modulation (QAM)) the input bits to produce a sequence of frequency-domain modulation symbols. Serial-to-parallel block 410 converts (i.e., demultiplexes) the serial modulated symbols to parallel data to produce N parallel symbol streams where N is the IFFT/FFT size used in BS 102 and UE 116. Size N IFFT block 415 then performs an IFFT operation on the N parallel symbol streams to produce time-domain output signals. Parallel-to-serial block 420 converts (i.e., multiplexes) the parallel time-domain output symbols from Size N IFFT block 415 to produce a serial time-domain signal. Add cyclic prefix block 425 then inserts a cyclic prefix to the time-domain signal. Finally, up-converter 430 modulates (i.e., up-converts) the output of add cyclic prefix block 425 to RF frequency for transmission via a wireless channel. The signal can also be filtered at baseband before conversion to RF frequency.

The transmitted RF signal arrives at UE 116 after passing through the wireless channel, and reverse operations to those at eNB 102 are performed. Down-converter 455 down-converts the received signal to baseband frequency, and remove cyclic prefix block 460 removes the cyclic prefix to produce the serial time-domain baseband signal. Serial-to-parallel block 465 converts the time-domain baseband signal to parallel time-domain signals. Size N FFT block 470 then performs an FFT algorithm to produce N parallel frequency-domain signals. Parallel-to-serial block 475 converts the parallel frequency-domain signals to a sequence of modulated data symbols. Channel decoding and demodulation block 480 demodulates and then decodes the modulated symbols to recover the original input data stream.

Each of eNBs 101-103 can implement a transmit path that is analogous to transmitting in the downlink to user equipment 111-116 and may implement a receive path that is analogous to receiving in the uplink from user equipment 111-116. Similarly, each one of user equipment 111-116 may implement a transmit path corresponding to the architecture for transmitting in the uplink to eNBs 101-103 and may implement a receive path corresponding to the architecture for receiving in the downlink from eNBs 101-103.

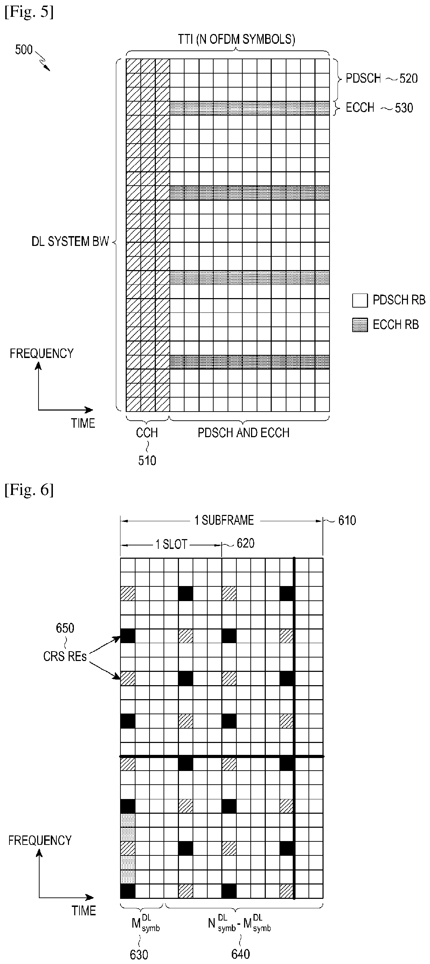

FIGURE 5 illustrates an example structure for a downlink (DL) transmission time interval (TTI) 500 according to embodiments of the present disclosure. An embodiment of the DL TTI structure 500 shown in FIGURE 5 is for illustration only. Other embodiments can be used without departing from the scope of the present disclosure.

As illustrated in FIGURE 5, a DL signaling uses orthogonal frequency division multiplexing (OFDM) and a DL TTI includes $N$=14 OFDM symbols in the time domain and K resource blocks (RBs) in the frequency domain. A first type of control channels (CCHs) is transmitted in a first $N_1$ OFDM symbols 510 including no transmission, $N_1$ =0. Remaining $N - N_1$ OFDM symbols are primarily used for transmitting PDSCHs 520 and, in some RBs of a TTI, for transmitting a second type of CCHs (enhanced CCHs (ECCHs)) 530.

An eNB 103 also transmits primary synchronization signals (PSS) and secondary synchronization signals (SSS), so that UE 116 synchronizes with the eNB 103 and performs cell identification. There are 504 unique physical-layer cell identities. The physical-layer cell identities are grouped into 168 unique physical-layer cell-identity groups which of each group contains three unique identities. The grouping is such that each physical-layer cell identity is part of one and only one physical-layer cell-identity group. A physical-layer cell identity $N_{ID}^{cell} = 3N_{ID}^{(1)} + N_{ID}^{(2)}$ is thus uniquely defined by a number $N_{ID}^{(1)}$ in the range of 0 to 167, representing the physical-layer cell-identity group, and a number $N_{ID}^{(2)}$ in the range of 0 to 2, representing the physical-layer identity within the physical-layer cell-identity group. Detecting a PSS enables a UE 116 to determine the physical-layer identity as well as a slot timing of the cell transmitting the PSS. Detecting a SSS enables the UE 116 to determine a radio frame timing, the physical-layer cell identity, a cyclic prefix length as well as the cell uses ether a frequency division duplex (FDD) or a time division duplex (TDD) scheme.

FIGURE 6 illustrates an example structure for a common reference signal resource element (CRS RE) mapping 600 according to embodiments of the present disclosure. An embodiment of the CRS RE mapping 600 shown in FIGURE 6 is for illustration only. Other embodiments may be used without departing from the scope of the present disclosure.

To assist cell search and synchronization, downlink (DL) signals include synchronization signals such as a primary synchronization signal (PSS) and a secondary synchronization signal (SSS). Although having the same structure, the time-domain positions of the synchronization signals within a sub-frame 610 that includes at least one slot 620 differs depending on whether a cell is operating in frequency division duplex (FDD) or time division duplex (TDD). Therefore, after acquiring the synchronization signals, a UE determines whether a cell operates on the FDD or on the TDD, and a subframe index within a frame. The PSS and SSS occupy the central 72 sub-carriers, also referred to as resource elements (REs) 650, of an operating bandwidth. Additionally, the PSS and SSS inform of a physical cell identifier (PCID) for a cell and therefore, after acquiring the PSS and SSS, a UE knows the PCID of the transmitting cell.

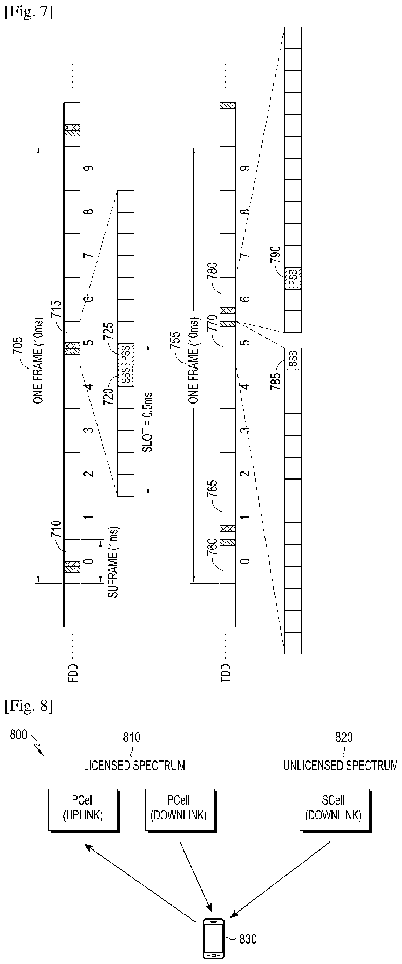

FIGURE 7 illustrates an example configuration of time domain positions for primary synchronization signal/secondary synchronization signal (PSS/SSS) 700 according to embodiments of the present disclosure. An embodiment of time domain positions for primary synchronization signal/secondary synchronization signal (PSS/SSS) 700 shown in FIGURE 7 is for illustration only. Other embodiments can be used without departing from the scope of the present disclosure.

As illustrated in FIGURE 7, in case of FDD, in every frame 705, a PSS 725 is transmitted within a last symbol of the first slot of subframes 0 and 5 (710 and 715), wherein a subframe includes two slots. A SSS 720 is transmitted within the second last symbol of the same slot. In case of TDD, in every frame 755, a PSS 790 is transmitted within the third symbol of subframes 1 and 6 (765 and 780), while a SSS 785 is transmitted in a last symbol of subframes 0 and 5 (760 and 770). The difference allows for the detection of the duplex scheme on a cell. The resource elements for the PSS and SSS are not available for transmissions of any other type of DL signals.

The Federal Communications Commission (FCC) defined unlicensed carriers to provide a cost-free public access spectrum. Use of unlicensed carriers by a UE is allowed only under the provisions that the UE does not generate noticeable interference to communications in licensed carriers and that communications in unlicensed carriers are not protected from interference. For example, unlicensed carriers include the industrial, scientific and medical (ISM) carriers and the unlicensed national information infrastructure (UNII) carriers that may be used by IEEE 802.11 devices. It may be possible to deploy LTE radio access technology (RAT) on an unlicensed frequency spectrum, that is known as LTE-Unlicensed (such as LTE-U) or license assisted access (LAA). A possible deployment scenario for the LAA is to deploy an LAA carrier as a part of carrier aggregation, where the LAA carrier is aggregated with another carrier(s) on a licensed spectrum.

FIGURE 8 illustrates an example carrier aggregation for a licensed spectrum and an unlicensed spectrum 800 according to embodiments of the present disclosure. An embodiment of the carrier aggregation structure 800 shown in FIGURE 8 is for illustration only. Other embodiments may be used without departing from the scope of the present disclosure.

An LTE radio access technology (RAT) is deployed on an unlicensed frequency spectrum (LTE-U). In this situation, an LTE-U carrier is deployed as a part of carrier aggregation schemes, wherein the LTE-U carrier is aggregated with another carrier on a licensed spectrum as illustrated in FIGURE 8. In a conventional arrangement, carriers on the licensed spectrum 810 are assigned as a primary cell (PCell) and carriers on the unlicensed spectrum 820 are assigned as a secondary cell (SCell) for a UE 830. Since there may be other RATs operating on the same unlicensed spectrum 820 as the LTE-U carrier, there is a need to enable co-existence of other RAT with LTE-U on an unlicensed frequency spectrum 820. For example, a TDM transmission pattern between a LTE-U transmitter and transmitters of other RATs such as a WiFi access point (AP) is implemented.

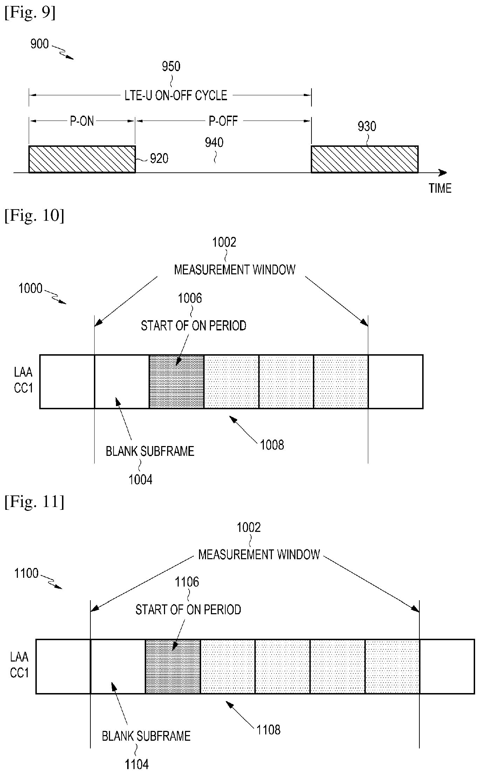

FIGURE 9 illustrates an example configuration of a transmission pattern for a licensed assist access (LAA) downlink carrier 900 according to embodiments of the present disclosure. An embodiment of the transmission pattern for a licensed assist access (LAA) downlink carrier 900 shown in FIGURE 9 is for illustration only. Other embodiments may be used without departing from the scope of the present disclosure.

As illustrated in FIGURE 9, an LAA carrier is ON (such as 920, 930) for a period P-ON and is OFF 940 for a period P-OFF. When the LAA carrier is ON, LTE signals are transmitted including at least one of a primary synchronization signal (PSS), a secondary synchronization signal (SSS), a common reference signal (CRS), a demodulation reference signal (DMRS), a physical downlink shared channel (PDSCH), a physical downlink control channel (PDCCH), an enhanced physical downlink common channel (EPDCCH), a channel status indication-reference signal (CSI-RS), or combinations thereof. However, when the LAA carrier is OFF, LTE signals are not transmitted.

The ON periods 920, 930 (or maximum channel occupancy time) have a maximum duration as defined by regulation (such as 10ms). The length for P-ON periods 920, 920 are adjusted or adapted by the scheduler of the LAA according to a buffer status or a traffic pattern at the LAA carrier and a co-existence metric requirement or target. WiFi APs or other RAT transmitters utilizes the P-OFF period 940 for transmissions since the period 940 is free from LAA interference.

If a listen-before-talk (LBT) protocol is applied, there is an idle period after the end of channel occupancy (such as a frame-based equipment). For example, a minimum idle period (such as 5%) of the channel occupancy is specified. The idle period includes a clear channel assessment (CCA) period towards the end of the idle period where carrier sensing is performed by a UE. The LBT protocol is defined for a load-based equipment.

Discovery reference signals (DRS) or discovery Signals (DS) is transmitted by an LTE cell on an unlicensed spectrum. The DRS comprises physical signals such as PSS, SSS, CRS and CSI-RS, if configured. The purposes or functions of the DRS for the LTE cell on an unlicensed spectrum include, but are not limited to, discovery of the LTE cell, synchronization to the LTE cell, and radio resource measurement (RRM) and CSI measurements of the LTE cell. Hereafter, the term LAA device refers to an eNB or a UE operating on an LAA carrier.

A UE is configured with one or more CSI processes per serving cell by higher layers. Each CSI process is associated with a CSI-RS resource and the CSI-interference measurement (CSI-IM) resource. A CSI reported by the UE corresponds to a CSI process configured by the higher layers. Each CSI process is configured with or without PMI/ RI reporting by higher layer signaling. A UE is configured with resource-restricted CSI measurements if subframe sets are configured by higher layers. CSI reporting is periodic or aperiodic. If the UE is configured with more than one serving cell, the UE transmits the CSI reporting for activated serving cell(s) only. As a result there is a need for CSI measurements and configuration on an unlicensed spectrum as well as a licensed spectrum. Note that the embodiments according to the present disclosures are not limited to operation on unlicensed spectrum, but also on a lightly licensed spectrum, a licensed shared spectrum and the like.

In certain embodiments, a UE measures a subframe when making CSI or RRM measurements on a serving cell (such as target cell) or a potential serving cell of an unlicensed (such as LAA) carrier. In one embodiment, for example ON duration case (such as type 1), a UE measures a subframe when a serving or target cell is transmitting one or more signals in the subframe for measuring the CSI at predetermined (or configurable) locations including CRS, CSI-RS, DRS, and/or LAA preamble signals. In another embodiment, for example OFF duration with blank case (such as type 2), due to LBT/CCA operation or because no traffic is scheduled on the LAA carrier no transmissions from the target or interfering cells are detected for the purpose of CSI measurement. In yet another embodiment, for example OFF duration with interference (such as type 3) at least one cell other than the serving or target cell is transmitting one or more signals that reflect ON duration interference (such as hidden node transmissions outside of the LBT/CCA threshold) or indicate a current set of contending nodes that are not transmitting during the ON duration due to the LBT protocol.

In order for a network to utilize measurements made on different subframes, an LAA CSI framework allows an LAA UE to make measurements such that different subframes are either restricted to the same type, or allow a network to appropriately interpret /map the LAA UE reports to a given type. A benefit of differentiating the measurement types is that differentiating the measurement allows appropriate determination of CSI of a target cell (such as channel quality indication/precoder matrix indicator/rank indicator (CQI/PMI/RI)) using type 1 measurements (such as ON duration) as well as to determine interference measurements (IM) for type 2 (such as OFF duration with blank) and type 3 (such as OFF duration with interference) states.

In certain embodiments, a CSI/IM measurement is differentiated between the type 2 (such as OFF duration with blank) and the type 3 (such as OFF duration with interference) states based on one or more measurement thresholds. For example a threshold in terms of measured power over a configured measurement bandwidth (such as CSI-RS/IMR resources and/or full bandwidth) is used to differentiate measurements of different types. These measurement thresholds are configured by higher layers or fixed for a given measurement type.

In one example, a measurement threshold for type 3 (such as OFF duration with interference) measurements (such as *measThreshIM*) is set to -107 dBm, and any IM measurements made in a given subframe with measurement power is greater or equal to the *measThreshIM* value classified in the type 3 (such as OFF duration with interference) measurement in a CSI report, while measurements below that value is classified as another measurement type such as the type 2 measurement (such as OFF duration with blank), or is not included as a part of the CSI/IM measurement and subsequent report.

In certain embodiments, multiple CSI/IM measurements are averaged across multiple time instances in order to improve accuracy and if a UE is configured or supports multiple subframes averaging, the measurement threshold is additionally used to refine a set of measurements that is considered for the purpose of averaging. For example, the type 2 measurements not within a given threshold range is excluded from an averaging filter and excluded from a subsequent CSI report. In such embodiments, measurement thresholds are separately configured for different measurement types of subframe sets, while a single measurement threshold is also applied to one or more measurement types or subframe sets.

In certain embodiments, in order to measure different types across multiple subframes, a UE is configured with one or more dynamic subframe sets for a CSI measurement. In one example, a subframe measurement set corresponds to a different measurement type (such as Type 1, Type 2, or Type 3). In one embodiment, a subframe set corresponds to more than one measurement type. In another embodiment, a subframe set is orthogonal to another corresponding subframe set. In yet another embodiment, a subframe set overlaps with another configured subframe set on one or more subframes. In yet another embodiment, one or more measurement thresholds correspond to a given subframe set.

In certain embodiments, subframe sets are configured by a higher layer signaling (such as radio resource control (RRC) or system information block (SIB)) with a bitmap or by using a combinatorial expression to define which subframes out of a given period of one or more frames are included in the subframe set. In such embodiments, an applicability of the subframe sets are indicated in a predefined, semi-static (such as RRC or SIB), or dynamic (such as physical layer signaling) scheme. For example one or more bits of a downlink control information (DCI) indicates which subframe sets are applicable for a UE to make CSI measurements of one or more CSI types. The CSI subframe sets apply to all active carriers of a given UE, or apply to individual or subsets of carriers for which a UE is configured to make CSI measurements. Additionally the higher-layer or the physical layer signaling is applied in a UE-specific manner, or is common to a group of UEs.

In certain embodiments, an LAA physical layer is designed according to a frame-based design. In such embodiments, a CSI measurement pattern follows a deterministic subframe pattern similar to a legacy framework, with the location of the RS(s) utilized for CSI known in predetermined locations and subframes for interference measurement also following a fixed structure. In addition, in such embodiments, timing of UE measurement based on CSI reference subframe gives eNB unambiguous knowledge of "state" (such as ON or OFF). A CSI reference subframe is preconfigured or indicated by higher layers. If the CSI subframe sets are configured, the CSI subframes are determined by an intersection of potential CSI references subframes and the relevant CSI subframe sets.

In certain embodiments, an LAA physical layer is designed according to a load-based design. In such embodiments, a CSI reference or measurement subframe depends on when an eNB successfully gains access to the channel. This operation is accomplished by providing an indication to a UE of channel access and subsequent CSI triggering. This indication operation is accomplished by dynamic signaling such as a physical layer signaling (such as DCI).

In certain embodiments, a blind detection of an eNB transmission (such as preamble, DRS, or other physical layer signals from an eNB such as cell specific RS in one or more predetermined locations in a subframe) is required to determine when CSI measurement begins. In such embodiments, a UE continually blindly detects the presence of such channel occupancy signals from the eNB. However, in order to provide more efficient operation, power efficiency, and reduce a likelihood of misdetection or false positives, a network configures the UE with a period where CSI measurement is expected to overlap with an ON duration. In such embodiments, a CSI measurement window comprises one or more LAA slots, subframes, or frames. A total duration of the measurement window is of a fixed duration or variable relative to a start of the ON duration. The subframes within the measurement window contain multiple CSI measurement types (such as Type 1, Type 2, and Type 3). Which subframes correspond to the different types within the measurement window follows a predetermined pattern or is variable due to the use of opportunistic spectrum access mechanisms such as LBT.

FIGURE 10 illustrates an example configuration of a fixed duration channel status indication (CSI) measurement window on a license assisted access (LAA) carrier 1000 according to embodiments of the present disclosure. An embodiment of the fixed duration channel status indication (CSI) measurement window on a licensed assisted access (LAA) carrier 1000 in FIGURE 10 is for illustration only. Other embodiments may be used without departing from the scope of the present disclosure.

As illustrated in FIGURE 10, the fixed duration channel status indication (CSI) measurement window for a single carrier on a license assisted access (LAA) carrier 1000 comprises 5 subframes having fixed duration in a measurement window 1002. A UE detects a subframe with a start of an eNB transmission 1006 in the first subframe based on a detection of a predetermined or configured signal structure (such as preamble, DRS, or CSI-RS). Which measurement types the UE applies to the different subframe types within the measurement window 1002 are based upon an application of measurement thresholds as aforementioned. In addition, the measurement window 1002 includes a blank subframe 1004 and normal frames 1008. More specifically, a CSI-RS is optionally added in the normal frames 1008.

FIGURE 11 illustrates an example configuration of a variable duration CSI measurement window on an LAA carrier 1100 according to embodiments of the present disclosure. An embodiment of the variable duration CSI measurement window on an LAA carrier 1100 shown in FIGURE 11 is for illustration only. Other embodiments may be used without departing from the scope of the present disclosure.

As illustrated in FIGURE 11, the variable duration channel status indication (CSI) measurement window for a single carrier on a license assisted access (LAA) carrier 1100 comprises 6 subframes having variable duration in a measurement window 1102. A UE detects a subframe with a start of an eNB transmission 1106 in the first subframe based on a detection of a predetermined or configured signal structure (such as preamble, DRS, or CSI-RS). Which measurement types the UE applies to the different subframe types within the measurement window 1102 are based upon an application of measurement thresholds as aforementioned. In addition, the measurement window includes a blank subframe 1104 and normal frames 1108. More specifically, a CSI-RS is optionally added in the normal frames 1108.

As aforementioned, the CSI measurement window 1102 for a single carrier includes a variable duration that depends on the detection of an ON period 1106. Once a start of the ON period 1106 of an eNB is detected (such as detection of a preamble, DRS, CSI-RS, CRS, or other signal) a UE applies a CSI measurement for a variable duration of 5 subframes. The duration of the measurement window 1102 is completely variable or constrained by a minimum and maximum duration that are predefined or configured by a higher layer signaling. Additionally the measurement of the ON period is constrained by a set of values, or a minimum and maximum duration that are preconfigured or configured by a higher layer signaling.

Interference measurements for CQI computation are also restricted to the measurement window 1102 for accuracy, while measurements for channel occupancy or long term interference do not need to be restricted. A time location indication of the measurement window 1102 is configured by a higher layer signaling and follows a periodic or aperiodic pattern (such as based on a configured discovery measurement timing configuration (DMTC) or a new CSI measurement window timing configuration (CMWTC)). In one embodiment, a time location indication is provided by a physical layer signaling (such as DCI).

In certain embodiments, a triggering for a periodic or an aperiodic CSI measurement is supported for an LAA CSI feedback. For licensed carriers a CSI reporting is periodic or aperiodic. However, there are unique challenges for a network to acquire a timely CSI feedback in an LAA. For example, an RS utilized for a CSI measurement is transmitted with a very low density or is transmitted only opportunistically when an eNB successfully acquires a channel satisfying regulatory requirements such as LBT. If the eNB fails to access the channel with a sufficient frequency, a reported CQI (such as periodic CQI) is outdated and not useful for the network. Similarly, interference measurements additionally need to be differentiated depending on the network state as aforementioned. For example, a UE may not report an interference measurement if it is determined that the resources(s) utilized for the measurement, are outside of an ongoing transmission burst from the eNB. In such embodiments, mechanisms for the network to indicate resources for the CSI measurement as well as reporting conditions (such as measurement thresholds) are possible solutions to accommodate opportunistic channel access and dynamic interference levels.

In one embodiment, a CSI report is sent in an uplink (UL) subframe n where the CSI reference is n - nCSIref. In such embodiment, nCSIref is not a fixed value but depends on the first LAA transmission in a CSI measurement window. This is beneficial to provide a CSI feedback without delay before the end of the CSI measurement window.

In another embodiment, a CSI report is sent in an UL subframe n that is a fixed offset relative to start or end of measurement window. In one example, a UE always reports a CSI in the first UL subframe after the end of the measurement window. In another example, a UE always reports a CSI in an UL subframe x after the start of the measurement window in t-x. This is beneficial that an eNB exactly knows when to expect the UE reports and bundling of multiple reports is easily accommodated. In such example, the UE makes multiple CSI reports during a measurement window across one or more subframes and the reports are bundled and transmitted using a single CSI reporting instance after the measurement window. In yet another example, CSI reports are sent in different reports based on the type of the CSI measurement report.

A UE is allowed to make unrestricted observations for the purpose of CSI measurement. However, alternatively, a UE needs to meet one or more conditions such as detection of preamble or only measurements within a single CSI window is averaged before sending a CSI report. For the target LAA deployments (such as small cells with low mobility), CQI is very semi-static, especially with LBT where an ON duration is expected to be free of the strongest interference due to CCA and backoff. As a result, 20ms or even 40ms CSI reporting is sufficient at least for "cold start" scheduling of UEs in an upcoming ON duration.

A UE is configured with a time period during which a CSI report is expected to be provided to an eNB.

However, when the UE needs to make such 'periodic' CSI reports becomes conditional on how recently an LAA carrier was utilized. This conditional transmission of a report is beneficial to introduce this when many potential LAA CCs are available to reduce reporting overhead. In one example if a delta of a CSI report measurement compared to the previously sent report(s) is below a configured threshold, a UE does not send an updated report. In another example, if a UE made an LAA CSI report within a time period X and an eNB is transmitting during an ON duration within the period X, the UE does not provide an additional CSI report since the last report provided to a network is still considered to be valid. During the period X, the eNB chooses not to transmit configured CSI measurement subframes, or signals and the UE is not expected to make any additional CSI measurements. Once the time period X is exceeded, the configured CSI transmission and measurement behavior resumes at the eNB and UE.

In yet another embodiment, a UE configured with a periodic CSI measurement only makes a measurement and subsequent report when an intersection of the configured CSI measurement subframes of a given CSI process coincide with the detected transmission of a RS used for CSI (such as CRS, CSI-RS, or CRS/CSI-RS configured as DRS). In one example of periodic interference measurement, the subframes are measured according to the configured subframes and REs (such as based on the CSI-IM configuration and corresponding ZP CSI-RS) regardless of the state of the cell. In another example, a periodic interference measurement is measured and reported only when the configured state (such as ON, OFF+Blank, OFF+Interference, LBT, neighbor cell, or RAT type) is detected.

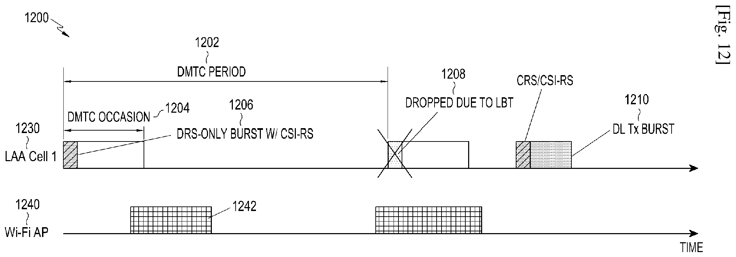

FIGURE 12 illustrates an example configuration of periodic and aperiodic discovery reference signal/CSI-reference signal (DRS/CSI-RS) occasions 1200 according to embodiments of the present disclosure. An embodiment of the periodic and aperiodic discovery reference signal/CSI-reference signal (DRS/CSI-RS) occasions 1200 shown in FIGURE 12 is for illustration only. Other embodiments may be used without departing from the scope of the present disclosure.

As illustrated in FIGURE 12, the periodic and aperiodic discovery reference signal/ CSI-reference signal (DRS/CSI-RS) occasions 1200 comprises an LAA Cell 1 1230 and a WiFi AP 1240. More specifically, the LAA Cell 1 1230 comprises a sub-frame including DRS-only burst with CSI-RS 1206, a subframe 1208 that is dropped due to LBT, and a subframe including CRS/CSI-RS in a header and DL Tx burst 1210. More specifically, a DMTC occasion 1204 is occurred during a DMTC period 1202. In addition, the WiFi AP 1240 comprises a plurality of transmission 1242. A function of DRS is extended to support a CSI measurement and DRS transmissions are beneficial to provide more frequency CSI measurement opportunities at a UE as illustrated in Figure 12.

In one embodiment, as illustrated in FIGURE 12, the CRS/CSI-RS in the subframe 1206 is always transmitted at the start of a DL transmission burst in the DMTC period 1202, including the case where PDSCH and the DRS are multiplexed outside of the DMTC. Providing the CRS/CSI-RS in the first subframe 1206 provides additional benefits for obtaining time/frequency synchronization on an unlicensed carrier as well as a CSI feedback with reduced delay.

In another embodiment, different combinations of CSI measurement mechanisms are supported and/or configured. In addition to the two aperiodic CSI approaches as aforementioned, a 5ms periodic measurement is configured (such as CSI is reported whenever subframes 0 or 5 correspond to a DL transmission burst). In one example, the following CSI schemes (such as a combination of schemes) is considered: 1) periodic CSI (such as every 5ms when the indicated subframes correspond to a successful subframe within a DL transmission burst), 2) periodic CSI + CSI measured every successfully transmitted DRS occasion (such as 40ms DMTC, 1 subframe duration + CSI-RS configured), 3) CSI measured in the 1st subframe of every DL transmission burst, 4) 1st subframe + DRS, and 5) periodic CSI + 1st subframe + DRS.

In such embodiment, significant benefits are expected for increasing a number of CSI measurement opportunities on an unlicensed carrier, especially in the case of aperiodic opportunities such as measuring CSI in the 1st subframe of a burst and also when CSI measurement is extended to DRS occasions. This because due to LBT, an interval between CSI measurement reports (such as even when periodically configured) becomes variable and latency increases with a traffic load. In addition the channel and interference measurements correspond to overlapping or non-overlapping measurement instances. In one example, interference measurement is performed only during a DL transmission burst (such as during the 1st subframe or last decoded subframe of a burst) and not during DRS or transmissions outside of a DL transmission burst, while a channel measurement is performed for DRS or (a)periodic CSI occasions within or outside of a DL transmission burst.

In certain embodiments, multiple potential LAA carriers are configured for a UE that exceed a CA capability (such as 10 20MHz carriers, for a UE with 2 CC capability on 5GHz band). Since these carriers are not active from the point of view of a UE, a CSI measurement is not performed. However, a network desires for the UE to make CSI measurements on those carriers in order to perform dynamic carrier selection. In this case the configured CSI process for a given LAA carrier is applicable for the CSI measurement even when no SCell is activated on that carrier as long as a deactivated SCell is configured. Alternatively even if no SCell is configured for the UE on that LAA carrier, the network provides the CSI process configuration as well as a semi-static (such as RRC) or dynamic (such as DCI) triggering mechanism for the CSI measurement and reports. This configuration is additionally provided by a higher layer signaling as part of a measurement object for a given LAA carrier(s).

In certain embodiments, a CSI measurement gap is additionally configured for one or more LAA carriers. For a set of configured LAA carriers a UE applies a common measurement window up to a maximum number of CCs that the UE is capable of performing measurement or is activated. The UE bundles a CSI feedback for multiple carriers depending on which carriers had successful access or utilize a sliding window of CCs to measure CSI during a given gap period. The CSI measurement gap corresponds to a single measurement window that rotates across carriers at different measurement window instances in a preconfigured or pattern indicated by higher layers. Alternative the measurement gap corresponds to a superset of multiple measurement windows.

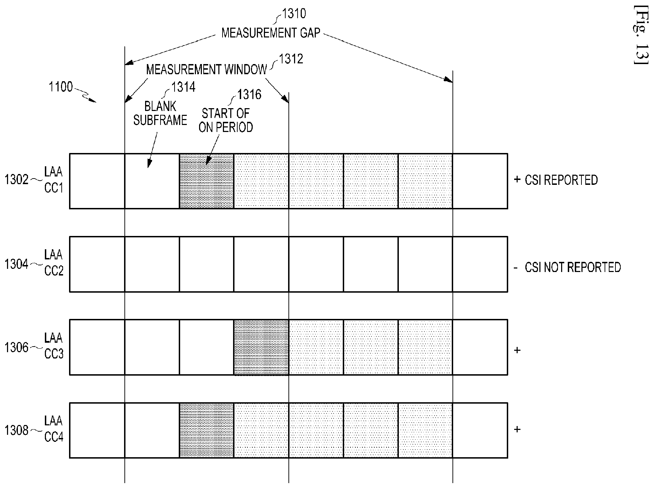

FIGURE 13 illustrates an example configuration of a measurement gap and a CSI measurement window across multiple LAA carriers 1300 according to embodiments of the present disclosure. An embodiment of the measurement gap and CSI measurement windows across multiple LAA carriers 1300 shown in FIGURE 13 is for illustration only. Other embodiments may be used without departing from the scope of the present disclosure.

As illustrated in FIGURE 13, the measurement gap and the CSI measurement window across multiple LAA carriers 1300 comprise a plurality of LAA carriers (CCs) 1302, 1304, 1306, 1308, a measurement gap 1310, a measurement window 1312, a blank subframe 1314, and a subframe with a start of ON frame 1316. In addition, the LAA carrier 1304 does not perform a CSI reporting to a network.

As illustrated in FIGURE 13, a superset of measurement windows corresponds to a CSI measurement gap 1310. A UE first makes measurements on the LAA CC1 1302 and the LAA CC2 1304, and provides CSI measurement reports depending on measurement conditions. After then, the end of the first measurement window the UE makes CSI measurements on the LAA CC3 1306 and the LAA CC4 1308, and provides one or more CSI reports depending on if the measurement report conditions are met (such as if any). Alternatively the UE provides all CSI reports after the conclusion of the measurement gap 1310 for the plurality of LAA CCs 1302, 1304, 1306, 1308 measured during the measurement window 1312. The timing of the measurement window 1312 is provided by higher layers, and the triggering by a higher layer or a dynamic physical layer signaling. The higher layer measurement gap configuration corresponds to an indication of a number of measurement windows 1312 and or the plurality of LAA CCs 1302, 1304, 1306, 1308 for the measurement. The plurality of LAA CCs 1302, 1304, 1306, 1308 are bundled across one or more measurement windows 1312 according to a higher layer configuration with a measurement pattern also configured by higher layers. It is also noted that the aforementioned embodiments apply to an UL as well as a DL CSI measurement and are extended to the indication of CSI resources for UL measurements and reports to a serving eNB.

In certain embodiments, a radio resource measurement (RRM) measurement based on DRS as well as CSI measurement is considered. In one example, extending a DRS RRM design to an unlicensed carrier, a network utilizes a configured DMTC as an opportunistic detection/measurement window for a UE. During the measurement window the UE needs to detect whether a cell was able to successfully access a channel and transmit a DRS occasion, and then make a RRM measurement (such as reference signal received power/reference signal received quality/reference signal strength indicator (RSRP/RSRQ/RSSI)). In addition, whether or not DRS is measured impacts the type or whether there is a transmission of a measurement report.

In another example, a measurement on subframes without a DRS transmission is differentiated from measurements on subframes where the DRS transmission was detected. A UE is configured to measure and/or report both or only one type of measurement. Similar to the aforementioned cell discovery, a low duty cycle periodic DRS is beneficial for LAA RRM to ensure sufficient and reliable measurement opportunities. However, a DRS is periodically transmitted with a fixed interval or in an aperiodic manner, depending on a channel access mechanism. As a result, mechanisms for a network to indicate which resources are used by a UE for RRM measurement is needed.

In one embodiment, a triggering and reporting framework needs to be enhanced for an LAA as an availability of the measurement of reports changes depending on a current network state. In one example, to support 'on-demand' transmission of a DRS, assistance signaling is provided by the network, such as an aperiodic indication of the DMTC window, or the exact resources used for the current DRS occasion. In another example, RSSI serves as a metric for interference and it is possible to infer RSSI from RSRP and RSRQ reports. However, if an LAA measurement signal is not transmitted on a carrier, RSRP and RSRQ reports are not available for the LAA carrier. For the LAA carrier, it is beneficial whether potential interference measurement enhancements such as extending a measurement procedure needs to include UE RSSI reports.

In another example, when a DRS is transmitted within a measurement window (such as if the measurement window is configured as an LAA DMTC), a UE reports RSRP, RSRQ, and/or RSSI. In yet another example of an inside DRS occasion. If a DRS occasion is missed (such as due to LBT), only an RSSI measurement is valid. However, in an outside DRS occasion (such as outside DMTC), an RSSI measurement is useful for channel selection (such as inter-frequency) and hidden node detection (such as intra-frequency).

In certain embodiments, an LAA operates on one or more carriers that are shared with one or more WiFi nodes. In such embodiments, WiFi nodes operating using 802.11-based channel bonding on these carriers, an adjacent channel utilization is highly correlated in time since channel bonding utilizes contiguous carriers (such as 40, 80, or 160 MHz BW is based on contiguous 2, 4, or 8 20MHz channels). In one embodiment of multi-carrier RRM measurements, a primary WiFi channel is identified by WiFi beacon detection or possibly by long-term measurement (such as RSSI). The primary channel is important to identify for coexistence, since the primary channel is used for a fallback and a LBT procedure is initiated on the carrier.

In another embodiment, in order to ensure coexistence with WiFi nodes operating in a channel bonding mode, an LAA nodes configures unlicensed carrier groups for RRM/CSI measurement based on detected BW of contending nodes (such as 2, 4, or 8 20MHz carriers). Reporting based on these carrier group measurements is beneficial because the reporting enables detection of a channel bonding operation and allows a channel section for an LAA that avoids the carriers that are being used by the WiFi nodes for the channel bonding or assist in a setting of LBT parameters used in a multi-carrier LBT procedure.

In such embodiments, in order to configure a carrier group measurement, an RRC or other higher-layer signaling associates one or more carrier indexes with a RRM carrier group. After the configuration, physical layer or higher layer triggering RRM carrier group measurement signals the carrier group index, that indicates measurement across all the cells in the RRM carrier group. The RRM carrier group triggering is applied as a 'one-shot' measurement, where a UE reports RRM measurements aperiodcally based on the signaling. In one example, an RRM measurement triggering is based on a periodic measurement configuration (such as every 40ms, or based on the configured DMTC). In such embodiment in order to take advantage of correlated measurements across the RRM carrier group, the UE filters/aggregates a measurement across a BW of multiple carriers within a group. This is useful to reduce overheads of the measurement and reduce UE processing requirements.

In another embodiment, a UE provides a single measurement for an RRM carrier group that is an aggregate of measurements across all of configured carriers in the RRM carrier group.

In yet another embodiment, a UE provides one measurement that is representative (such as primary) of the measurement for all carriers within a group. In one example, a UE only provides a measurement on one of the carriers within the carrier group that is identified as corresponding to a primary carrier of an adjacent WiFi node. In another example, a representative carrier is selected by a UE based on a configured measurement threshold or is indicated by a higher layer signaling.

In yet another embodiment, a UE provides a delta measurement for non-representative carriers in addition to a measurement of a representative carrier (such as for carriers corresponding to a secondary channels of an adjacent WiFi node). This is beneficial in reducing measurement overheads since the delta measurement is quantized with a much lower granularity than the representative measurement. In one example, if a carrier group A contains 4 20MHz carriers, a UE reports a measured RSSI value of -92dBm on a representative carrier and indicates values of {-1, 0, +2}dBm on remaining 3 non-primary carriers of an RRM carrier group.

In such embodiments, a UE has a measurement threshold configured for indicating whether one or more measurements across carriers is provided to higher layers for a layer 1 (L1) or a layer 3 (L3) filtering. This threshold is independent for each carrier or one common threshold is configured for all carriers within a group.

Although the present disclosure has been described with an exemplary embodiment, various changes and modifications may be suggested to one skilled in the art. It is intended that the present disclosure encompass such changes and modifications as fall within the scope of the appended claims.

None of the description in this application should be read as implying that any particular element, step, or function is an essential element that must be included in the claims scope. The scope of patented subject matter is defined by the claims.

**Claims**

1. A method for channel state indication, CSI, measurement on an unlicensed spectrum, the method comprising:

    receiving, by a user equipment, UE, a downlink signal from a base station using a carrier on the unlicensed spectrum, wherein the carrier is a licensed assisted access, LAA carrier and the carrier has an ON duration (920, 930) and an OFF duration (940);
    performing said measurement, by the UE, in one or more subframes of the downlink signal based on a measurement window, in accordance with a set of configuration parameters, to generate channel state information; and
    transmitting an uplink signal including the channel state information to the base station,

    said method being **characterized in that** the measurement window in a frame includes all subframes in the ON duration in the frame and at least one subframe in the OFF duration in the frame, and duration of the measurement window in the frame is based on a start subframe of the ON duration in the frame.

2. The method of claim 1, wherein performing the measurement comprises:

    measuring one or more reference signals in the downlink signal received from the base station during the ON duration; and
    measuring interference received from one or more neighbor base stations during the OFF duration.

3. The method of claim 1, wherein performing the measurement comprises:

    triggering the channel state information to be included in the uplink signal during the measurement window; and
    triggering the channel state information to be included in the uplink signal at a specific subframe position.

4. The method of claim 1, wherein the uplink signal including the channel state information is transmitted in accordance with a time period that exceeds a threshold configured by the eNB using a higher layer signaling or a physical layer signaling.

5. The method of claim 1, wherein the set of configuration parameters used to measure the one or more subframes included in the downlink signal is configured by the eNB using a higher layer signaling or a physical layer signaling.

6. A user equipment, UE, comprising:

    at least one transceiver; and
    at least one controller coupled to the at least one transceiver, wherein the at least one controller is configured to:

        receive a downlink signal from a base station using a carrier on an unlicensed spectrum, wherein the carrier is a licensed assisted access, LAA carrier and the carrier has an ON duration (920, 930) and an OFF duration (940);
        perform channel state indication, CSI, measurement in one or more subframes of the downlink signal based on a measurement window, in accordance with a set of configuration parameters, to generate channel state information; and
        transmit an uplink signal including the channel state information to the base station;

    said UE being **characterized in that** the measurement window in a frame includes all subframes in the ON duration in the frame and at least one subframe in the OFF duration in the frame, and duration of the measurement window in the frame is based on a start subframe of the ON duration in the frame.

7. The UE of claim 6, wherein the at least one controller is further configured to be operated according to one of methods in claims 2 to 5.

8. A method for measuring channel state indication, CSI, measurement on an unlicensed spectrum, the method comprising:

transmitting, by a base station, a downlink signal using a carrier on the unlicensed spectrum, to a user equipment, UE, wherein the carrier is a licensed assisted access, LAA carrier and the carrier has an ON duration (920, 930) and an OFF duration (940); and
receiving an uplink signal including channel state information from the UE,

wherein the channel state information is generated based on performing said measurement, by the UE, in one or more subframes of the downlink signal based on a measurement window, in accordance with a set of configuration parameters,
said method being **characterized in that** the measurement window in a frame includes all subframes in the ON duration in the frame and at least one subframe in the OFF duration in the frame, and duration of the measurement window in the frame is based on a start subframe of the ON duration in the frame.

9. The method of claim 8, wherein the uplink signal including the channel state information is received in accordance with a time period that exceeds a threshold configured by the base station using a higher layer signaling or a physical layer signaling.

10. A base station, comprising:

at least one transceiver; and
at least one controller coupled to the at least one transceiver, wherein the at least one controller is configured to:

transmit a downlink signal using a carrier on the unlicensed spectrum,to a user equipment, UE, wherein the carrier is a licensed assisted access, LAA carrier and the carrier has an ON duration (920, 930) and an OFF duration (940); and
receive an uplink signal including channel state information from the UE,

wherein the channel state information is generated based on performing channel state indication, CSI, measurement, by the UE, in one or more subframes of the downlink signal based on a measurement window, in accordance with a set of configuration parameters,
said base station being **characterized in that** the measurement window in a frame includes all subframes in the ON duration in the frame and at least one subframe in the OFF duration in the frame, and duration of the measurement window in the frame is based on a start subframe of the ON duration in the frame.

11. The base station of claim 10, wherein the uplink signal including the channel state information is received in accordance with a time period that exceeds a threshold configured by the base station using a higher layer signaling or a physical layer signaling.

**Patentansprüche**

1. Verfahren zum Messen einer Kanalzustandsanzeige, CSI, auf einer lizenzfreien Frequenz, das Verfahren umfassend:

Empfangen, durch ein Benutzergerät, UE, eines Downlink-Signals von einer Basisstation unter Verwendung eines Trägers auf der lizenzfreien Frequenz, wobei der Träger ein Licensed-Assisted-Access-(LAA-)-Träger ist und der Träger eine EIN-Dauer (920, 930) und eine AUS-Dauer (940) aufweist;
Durchführen der Messung durch die UE in einem oder mehreren Subrahmen des Downlink-Signals auf Grundlage eines Messfensters gemäß einem Satz von Konfigurationsparametern, um Kanalzustandsinformationen zu erzeugen; und Übertragen eines Uplink-Signals, das die Kanalzustandsinformationen enthält, an die Basisstation,
wobei das Verfahren **dadurch gekennzeichnet ist, dass** das Messfenster in einem Rahmen alle Subrahmen in der EIN-Dauer in dem Rahmen und mindestens einen Subrahmen in der AUS-Dauer in dem Rahmen enthält, und eine Dauer des Messfensters in dem Rahmen auf einem Start-Subrahmen der EIN-Dauer in dem Rahmen basiert.

2. Verfahren nach Anspruch 1, wobei das Durchführen der Messung umfasst: Messen von einem oder mehreren Referenzsignalen in dem Downlink-Signal, die von der Basisstation während der EIN-Dauer empfangen werden; und
Messen von Interferenzen, die von einer oder mehreren benachbarten Basisstationen während der AUS-Dauer empfangen werden.

3. Verfahren nach Anspruch 1, wobei das Durchführen der Messung umfasst: Auslösen der Kanalzustandsinformation, die während des Messfensters in dem Uplink-Signal enthalten sein soll; und
Auslösen der Kanalzustandsinformation, die in dem Uplink-Signal an einer spezifischen Subrahmen-Position enthalten sein soll.

4. Verfahren nach Anspruch 1, wobei das Uplink-Signal, das die Kanalzustandsinformationen enthält, gemäß einer Zeitspanne übertragen wird, die einen Schwellenwert, der durch die eNB unter Verwendung einer Signalisierung höherer Schicht oder einer Signalisierung der physikalischen Schicht konfiguriert wird, überschreitet.

5. Verfahren nach Anspruch 1, wobei der Satz von Konfigurationsparametern, der zum Messen von dem einen oder den mehreren Subrahmen, die in dem Downlink-Signal enthalten sind, verwendet wird, durch die eNB unter Verwendung einer Signalisierung höherer Schicht oder einer Signalisierung der physikalischen Schicht konfiguriert wird.

6. Benutzergerät, UE, umfassend:

 mindestens einen Sendeempfänger; und
 mindestens eine Steuerung, die mit mindestens einem Sendeempfänger verbunden ist, wobei der mindestens eine Sendeempfänger konfiguriert ist, um:

  ein Downlink-Signal von einer Basisstation unter Verwendung eines Trägers auf einer lizenzfreien Frequenz zu empfangen, wobei der Träger ein Licensed-Assisted-Access-(LAA-)-Träger ist und der Träger eine EIN-Dauer (920, 930) und eine AUS-Dauer (940) aufweist;
  eine Messung einer Kanalzustandsanzeige, CSI, in einem oder mehreren Subrahmen des Downlink-Signals auf Grundlage eines Messfensters gemäß einem Satz von Konfigurationsparametern durchzuführen, um Kanalzustandsinformationen zu erzeugen; und
  ein Uplink-Signal, das die Kanalzustandsinformationen enthält, an die Basisstation zu übertragen;

 wobei die UE **dadurch gekennzeichnet ist, dass** das Messfenster in einem Rahmen alle Subrahmen in der EIN-Dauer in dem Rahmen und mindestens einen Subrahmen in der AUS-Dauer in dem Rahmen enthält, und eine Dauer des Messfensters in dem Rahmen auf einem Start-Subrahmen der EIN-Dauer in dem Rahmen basiert.

7. Die UE nach Anspruch 6, wobei die mindestens eine Steuerung ferner konfiguriert ist, um nach einem der Verfahren in Anspruch 2 bis 5 betrieben zu werden.

8. Verfahren zum Messen einer Kanalzustandsanzeige, CSI, auf einer lizenzfreien Frequenz, das Verfahren umfassend:

 Übertragen, durch eine Basisstation, eines Downlink-Signals unter Verwendung eines Trägers auf der lizenzfreien Frequenz an ein Benutzergerät, UE, wobei der Träger ein Licensed-Assisted-Access-(LAA-)-Träger ist und der Träger eine EIN-Dauer (920, 930) und eine AUS-Dauer (940) aufweist; und
 Empfangen eines Uplink-Signals, das Kanalzustandsinformationen von der UE enthält, wobei die Kanalzustandsinformationen auf Grundlage des Durchführens der Messung durch die UE in einem oder mehreren Subrahmen des Downlink-Signals auf Grundlage eines Messfensters gemäß einem Satz von Konfigurationsparametern erzeugt werden,

 wobei das Verfahren **dadurch gekennzeichnet ist, dass** das Messfenster in einem Rahmen alle Subrahmen in der EIN-Dauer in dem Rahmen und mindestens einen Subrahmen in der AUS-Dauer in dem Rahmen enthält, und eine Dauer des Messfensters in dem Rahmen auf einem Start-Subrahmen der EIN-Dauer in dem Rahmen basiert.

9. Verfahren nach Anspruch 8, wobei das Uplink-Signal, das die Kanalzustandsinformationen enthält, gemäß einer Zeitspanne empfangen wird, die einen Schwellenwert, der durch die Basisstation unter Verwendung einer Signalisierung höherer Schicht oder einer Signalisierung der physikalischen Schicht konfiguriert wird, überschreitet.

10. Basisstation, umfassend:

 mindestens einen Sendeempfänger; und
 mindestens eine Steuerung, die mit mindestens einem Sendeempfänger verbunden ist, wobei der mindestens eine Sendeempfänger konfiguriert ist, um:

  ein Downlink-Signal unter Verwendung eines Trägers auf der lizenzfreien Frequenz an ein Benutzergerät, UE, zu übertragen, wobei der Träger ein Licensed-Assisted-Access-(LAA)-Träger ist, und der Träger eine EIN-Dauer (920, 930) und eine AUS-Dauer (940) aufweist; und
  ein Uplink-Signal, das die Kanalzustandsinformationen enthält, von der UE zu empfangen,

 wobei die Kanalzustandsinformationen auf Grundlage des Durchführens des Messens der Kanalzustandsanzeige, CSI, durch die UE in einem oder mehreren Subrahmen des Downlink-Signals auf Grundlage eines Messfensters gemäß einem Satz von Konfigurationsparametern erzeugt wird, wobei die Basisstation **dadurch gekennzeichnet ist, dass** das Messfenster in einem Rahmen alle Subrahmen in der EIN-Dauer in dem Rahmen und mindestens einen Subrahmen in der AUS-Dauer in dem Rahmen enthält, und eine Dauer des Messfensters in dem Rahmen auf einem Start-Subrahmen der EIN-Dauer in dem Rahmen basiert.

11. Basisstation nach Anspruch 10, wobei das Uplink-Signal, das die Kanalzustandsinformationen enthält, gemäß einer Zeitspanne übertragen wird, die einen Schwellenwert überschreitet, der durch die eNB unter Verwendung einer Signalisierung höherer Schicht oder einer Signalisierung der physikalischen Schicht konfiguriert wird.

**Revendications**

1. Procédé pour la mesure d'une indication d'état de canal, CSI, sur un spectre sans licence, le procédé comprenant :

   la réception, par un équipement d'utilisateur, UE, d'un signal de liaison descendante depuis une station de base à l'aide d'une porteuse sur le spectre sans licence, la porteuse étant une porteuse d'accès assisté sous licence, LAA, et la porteuse ayant une durée ON (920, 930) et une durée OFF (940) ;
   l'exécution de ladite mesure, par l'UE, dans un ou plusieurs sous-cadres du signal de liaison descendante sur la base d'une fenêtre de mesure, en fonction d'un ensemble de paramètres de configuration, pour générer une information d'état de canal ; et
   la transmission d'un signal de liaison montante comprenant l'information d'état de canal à la station de base,

   ledit procédé étant **caractérisé en ce que** la fenêtre de mesure dans un cadre comprend tous les sous-cadres dans la durée ON dans le cadre et au moins un sous-cadre dans la durée OFF dans le cadre, et la durée de la fenêtre de mesure dans le cadre est basée sur un sous-cadre de départ de la durée ON dans le cadre.

2. Procédé selon la revendication 1, dans lequel l'exécution de la mesure comprend :

   la mesure d'un ou de plusieurs signaux de référence dans le signal de liaison descendante reçu depuis la station de base pendant la durée ON ; et

la mesure de l'interférence reçue depuis une ou plusieurs stations de base voisines pendant la durée OFF.

3. Procédé selon la revendication 1, dans lequel l'exécution de la mesure comprend :

   le déclenchement de l'information d'état de canal de manière à l'inclure dans le signal de liaison montante pendant la fenêtre de mesure ; et
   le déclenchement de l'information d'état de canal de manière à l'inclure dans le signal de liaison montante en une position de sous-cadre spécifique.

4. Procédé selon la revendication 1, dans lequel le signal de liaison montante comprenant l'information d'état de canal est transmis en fonction d'une période de temps dépassant un seuil configuré par l'eNB à l'aide d'une signalisation de couche supérieure ou d'une signalisation de couche physique.

5. Procédé selon la revendication 1, dans lequel l'ensemble de paramètres de configuration utilisés pour mesurer les un ou plusieurs sous-cadres inclus dans le signal de liaison descendante est configuré par l'eNB à l'aide d'une signalisation de couche supérieure ou d'une signalisation de couche physique.

6. Équipement d'utilisateur, UE, comprenant :

   au moins un émetteur-récepteur ; et
   au moins un dispositif de commande accouplé à l'au moins un émetteur-récepteur, l'au moins un dispositif de commande étant configuré pour :

   recevoir une liaison descendante depuis une station de base à l'aide d'une porteuse sur un spectre sans licence, la porteuse étant une porteuse d'accès assisté sous licence, LAA, et la porteuse ayant une durée ON (920, 930) et une durée OFF (940) ;
   exécuter une mesure d'indication d'état de canal dans un ou plusieurs sous-cadres du signal de liaison descendante sur la base d'une fenêtre de mesure, en fonction d'un ensemble de paramètres de configuration, pour générer une information d'état de canal ; et
   transmettre un signal de liaison montante comprenant l'information d'état de canal à la station de base ;

   ledit UE étant **caractérisé en ce que**
   la fenêtre de mesure dans un cadre comprend tous les sous-cadres dans la durée ON dans le cadre et au moins un sous-cadre dans la durée OFF dans le cadre, et la durée de la fenêtre de mesure dans le cadre est basée sur un sous-cadre de départ de la durée ON dans le cadre.

7. UE selon la revendication 6, dans lequel l'au moins un dispositif de commande est en outre configuré pour fonctionner selon l'un des procédés dans les revendications 2 à 5.

8. Procédé pour la mesure d'une indication d'état de canal, CSI sur un spectre sans licence, le procédé comprenant :

la transmission, par une station de base, d'un signal de liaison descendante à l'aide d'une porteuse sur le spectre sans licence, à un équipement d'utilisateur, UE, la porteuse étant une porteuse d'accès assisté sous licence, LAA, et la porteuse ayant une durée ON (920, 930) et une durée OFF (940) ; et

la réception d'un signal de liaison montante comprenant des informations d'état de canal depuis l'UE,

dans lequel l'information d'état de canal est générée sur la base de l'exécution de ladite mesure, par l'UE, dans un ou plusieurs sous-cadres du signal de liaison descendante sur la base d'une fenêtre de mesure, en fonction d'un ensemble de paramètres de configuration,

ledit procédé étant **caractérisé en ce que**

la fenêtre de mesure dans un cadre comprend tous les sous-cadres dans la durée ON dans le cadre et au moins un sous-cadre dans la durée OFF dans le cadre, et la durée de la fenêtre de mesure dans le cadre est basée sur un sous-cadre de départ de la durée ON dans le cadre.

9. Procédé selon la revendication 8, dans lequel le signal de liaison montante comprenant l'information d'état de canal est reçu en fonction d'une période de temps dépassant un seuil configuré par la station de base à l'aide d'une signalisation de couche supérieure ou d'une signalisation de couche physique.

10. Station de base comprenant :

au moins un émetteur-récepteur ; et
au moins un dispositif de commande accouplé à l'au moins un émetteur-récepteur, l'au moins un dispositif de commande étant configuré pour :

transmettre un signal de liaison descendante à l'aide d'une porteuse sur un spectre sans licence, à un équipement d'utilisateur, UE, la porteuse étant une porteuse d'accès assisté sous licence, LAA, et la porteuse ayant une durée ON (920, 930) et une durée OFF (940) ; et
recevoir un signal de liaison montante comprenant une information d'état de canal depuis l'UE,

dans laquelle l'information d'état de canal est générée sur la base de l'exécution de la mesure d'indication d'état de canal, CSI, par l'UE, dans un ou plusieurs sous-cadre du signal de liaison descendante sur la base d'une fenêtre de mesure, en fonction d'un ensemble de paramètres de configuration, ladite station de base étant **caractérisée en ce que**,
la fenêtre de mesure dans un cadre comprend tous les sous-cadres dans la durée ON dans le cadre et au moins un sous-cadre dans la durée OFF dans le cadre, et la durée de la fenêtre de mesure dans le cadre est basée sur un sous-cadre de départ de la durée ON dans le cadre

11. Station de base selon la revendication 10, dans laquelle le signal de liaison montante comprenant l'information d'état de canal est reçu en fonction d'une période de temps dépassant un seuil configuré par la station de base à l'aide d'une signalisation de couche supérieure ou d'une signalisation de couche physique.

[Fig. 1]

[Fig. 2]

[Fig. 3]

[Fig. 4a]

[Fig. 4b]

[Fig. 5]

[Fig. 6]

[Fig. 7]

[Fig. 8]

[Fig. 9]

900

950

|← ——————— LTE-U ON-OFF CYCLE ——————— →|

|← P-ON →|← ——— P-OFF ——— →|

930

920

940

TIME

[Fig. 10]

1002

MEASUREMENT WINDOW

1000

1006

START OF ON PERIOD

LAA
CC1

BLANK SUBFRAME

1004

1008

[Fig. 11]

1002

MEASUREMENT WINDOW

1100

1106

START OF ON PERIOD

LAA
CC1

BLANK SUBFRAME

1104

1108

[Fig. 12]

[Fig. 13]

**EP 3 216 262 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20140036881 A1

### Non-patent literature cited in the description

- **SAMSUNG.** Discussion on solutions for required functionalities and design targets for LAA. *3GPP Draft; R1-143879,* 05 October 2014